# EUROPEAN PATENT SPECIFICATION

(11) **EP 1 369 024 B1**
(45) Date of publication and mention of the grant of the patent: **30.11.2005**
(21) Application number: 03076214.0
(22) Date of filing: 28.04.2003
(51) Int. Cl.: A01D 75/20

(54) **An agricultural machine for performing crop processing**
Landwirtschaftliche Maschine zur Behandlung von Erntegut
Machine agricole pour le traitement de récolte

(30) Priority: 06.06.2002 NL 1020795
(43) Date of publication of application: 10.12.2003
(73) Proprietor: Lely Enterprises AG, 6300 ZUG (CH)
(72) Inventor: van den Berg, Karel, 2971 BR Bleskensgraaf (NL)
(74) Representative: Corten, Maurice Jean F.M.

(56) References cited:
- US-A- 3 927 513
- US-A- 4 241 567
- US-A- 4 354 339
- US-A- 4 897 988
- US-A- 5 133 175

## Description

The invention relates to an agricultural machine for performing crop processing, the agricultural machine being provided with a movable agricultural device for performing the agricultural operation, according to the preamble of claim 1.

Such an agricultural machine is generally known by US-A-5 133 175. A drawback of such a known agricultural machine is that the driver of the agricultural machine is principally responsible for the safety of the environment, in particular the safety of human beings and animals. When observing (possible) danger for the safety of the environment, the driver should activate, on the one hand, an emergency stop that stops the agricultural operation and should operate, on the other hand, the brakes of the tractor, so as to prevent damage or injury. Moreover, each time before putting the agricultural machine into operation, a driver should verify whether somebody or something has crept into or has anyhow got into the agricultural machine.

The present invention aims inter alia at providing an agricultural machine for performing crop-processing, which machine comprises an improved safety-system.

For this purpose, according to the invention an agricultural machine of the above-described type, said object is achieved by the features of the characterizing portion of claim 1. On the one hand, by means of such a protecting element penetration into the autonomous agricultural machine is made difficult if not impossible, while, on the other hand, the crop is not harmfully influenced or damaged. The degree of flexibility and the weight of the protecting element can simply be determined per crop by means of experimental tests.

If the protecting element is movably disposed on the agricultural machine, in particular pivotably in a direction away from the outlet, the influence of the protecting element on the crop is reduced further.

In an embodiment of an agricultural machine according to the invention the agricultural machine is provided with a stop for blocking a movement of the protecting element in a direction through the outlet into the agricultural machine, so that penetration into the inner part of the agricultural machine is impeded further, which is beneficial to safety.

A further improvement of safety may be obtained in an embodiment of an agricultural machine according to the invention, in which the agricultural machine is provided with a movement-detector for detecting an object that moves through the outlet into the agricultural machine. In dependence on the result of the movement-detection, various safety measures can be taken automatically, and the drive of the agricultural machine and/or the drive of the agricultural device can for example be interrupted. The movement-detector, more in particular the movement-attempt-detector with which the agricultural machine is provided, may be constituted by a pressure-sensor for detecting a pressure on the protecting element in a direction towards the agricultural machine.

The protecting element is preferably a dragging flap or a dragging plate.

The invention will be explained hereinafter in further detail with reference to the embodiments shown in the drawing, in which:

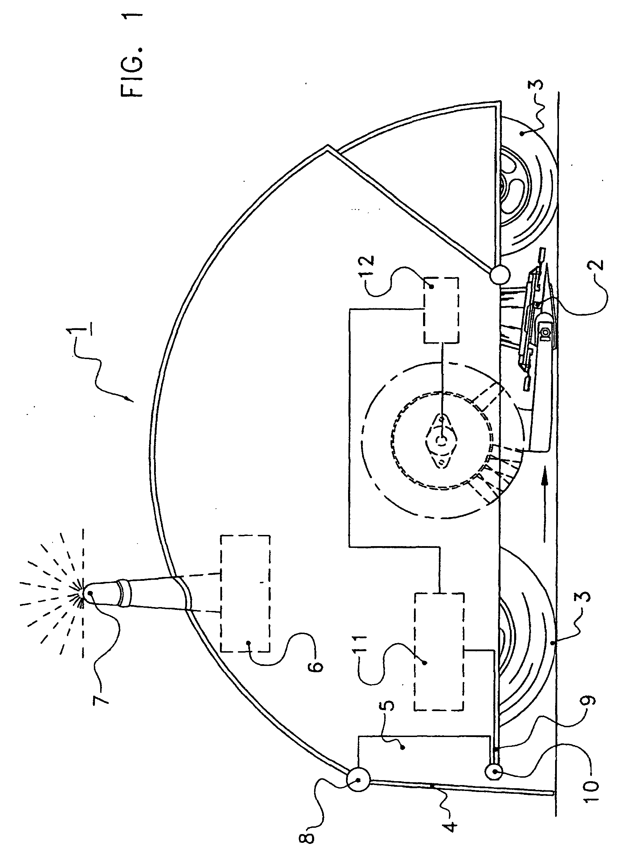

Figure 1 shows schematically in side view an autonomous agricultural machine in an embodiment of the invention.

Figure 1 shows schematically in side view an autonomous agricultural machine 1 in an embodiment of the invention. It is pointed out here that an autonomous machine, i.e. a machine that does not require a driver for being moved, but moves with the aid of inter alia a position-determining system, is known per se and will not be set out here in further detail for the sake of simplicity of the description. The autonomous agricultural machine 1 is suitable for performing an agricultural operation, in particular a crop-processing operation, on a crop that is present on an agricultural parcel. In the embodiment shown the autonomous agricultural machine 1 is an autonomous mowing machine that mows crop that is present on the agricultural parcel by means of a mowing unit 2. Although several sorts of mowing units known per se may be used, in the embodiment shown the mowing unit 2 is constituted by mowing discs that are present on a cutter bar and are rotatable about an axis, which mowing discs are provided with mowing knives. It will be obvious that the agricultural machine may also be an agricultural machine for performing other crop-processing operations.

The agricultural machine 1 is supported and moved over the agricultural parcel by means of wheels 3. The autonomous agricultural machine 1 further comprises a protecting element 4, in the embodiment shown constituted by a dragging plate (although other protecting means, such as a dragging flap, downwardly hanging arms, etc.) may be applied as well for protecting an outlet 5 for discharging processed crop from the agricultural machine 1. The protecting element 4 has such a flexibility and such a weight that the processed crop is not harmfully influenced by the protecting element 4.

The agricultural machine 1 further comprises a position-determining element 6 known per se, in the embodiment shown provided with an aerial 7, for determining the position of the autonomous agricultural machine 1 in the agricultural parcel by means of for example a GPS-system.

The dragging plate 4 is disposed on the agricultural machine 1 so as to be pivotable about a pivot axis 8. It is pointed out here that an other way of being movably disposed, for example by means of a parallelogram-suspension, by means of telescopic pistons or the like, may also be applied within the scope of the invention. In the embodiment shown, a pivotal movement in the direction of the outlet 5 is possible, while by means of a stop 9 the movement of the dragging plate 4 in a direction through the outlet into the agricultural machine 1 is blocked.

A pressure-sensor 10 for detecting a pressure on the dragging plate 4 is disposed on the stop 9 and detects pressure on the dragging plate 4 in a direction towards the agricultural machine 1. It is pointed out here that other movement-detectors, such as for example a camera with picture-recognition, for detecting a movement of an object through the outlet 5 into the agricultural machine 1 may also be applied within the scope of the invention.

In dependence on the measurement result of the pressure-sensor 10, various safety measures can be taken automatically; for example the drive 11 of the wheels 3 of the agricultural machine 1 and/or the drive 12 of the mowing unit 2 can be interrupted.

## Claims

1. An agricultural machine (1) for performing crop processing, the agricultural machine being provided with a movable agricultural device (2) for performing the agricultural operation, said agricultural machine being provided with an outlet (5) for discharging processed crop from the agricultural machine and with a protecting element (4) for protecting the outlet, **characterized in that** the agricultural machine (1) is an autonomous agricultural machine, the protecting element (4) having such a flexibility and such a weight that the processed crop is net harmfully influenced by the protecting element (4).

2. An agricultural machine as claimed in claim 1, **characterized in that** the protecting element is movably disposed on the agricultural machine.

3. An agricultural machine as claimed in claim 2, **characterized in that** the agricultural machine is provided with a stop for blocking a movement of the protecting element in a direction through the outlet into the agricultural machine.

4. An agricultural machine as claimed in any one of the preceding claims, **characterized in that** the agricultural machine is provided with a movement-detector for detecting an object that moves through the outlet into the agricultural machine.

5. An agricultural machine as claimed in claims 3 and 4, **characterized in that** the agricultural machine is provided with a pressure-sensor for detecting a pressure on the protecting element in a direction towards the agricultural machine.

6. An agricultural machine as claimed in any one of the preceding claims, **characterized in that** the protecting element is a dragging flap or a dragging plate.

## Patentansprüche

1. Landwirtschaftliche Maschine (1) zur Durchführung einer Mähgutaufbereitung, wobei die landwirtschaftliche Maschine mit einer beweglichen landwirtschaftlichen Vorrichtung (2) zur Durchführung der landwirtschaftlichen Arbeit versehen ist, und wobei die landwirtschaftliche Maschine mit einem Auslaß (5) zum Ausleiten von aufbereitetem Mähgut aus der landwirtschaftlichen Maschine und mit einem Schutzelement (4) zum Schutz des Auslasses versehen ist,
**dadurch gekennzeichnet, daß** die landwirtschaftliche Maschine (1) eine autonome landwirtschaftliche Maschine ist, wobei das Schutzelement (4) eine solche Flexibilität und ein solches Gewicht aufweist, daß das aufbereitete Mähgut von dem Schutzelement (4) nicht negativ beeinflußt wird.

2. Landwirtschaftliche Maschine nach Anspruch 1,
**dadurch gekennzeichnet, daß** das Schutzelement beweglich an der landwirtschaftlichen Maschine angeordnet ist.

3. Landwirtschaftliche Maschine nach Anspruch 2,
**dadurch gekennzeichnet, daß** die landwirtschaftliche Maschine mit einem Anschlag versehen ist, um eine Bewegung des Schutzelements in einer Richtung durch den Auslaß hindurch in die landwirtschaftliche Maschine hinein zu blockieren.

4. Landwirtschaftliche Maschine nach einem der vorhergehenden Ansprüche,
**dadurch gekennzeichnet, daß** die landwirtschaftliche Maschine mit einem Bewegungsdetektor zum Detektieren eines Objekts versehen ist, das sich durch den Auslaß hindurch in die landwirtschaftliche Maschine hineinbewegt.

5. Landwirtschaftliche Maschine nach den Ansprüche 3 und 4,
**dadurch gekennzeichnet, daß** die landwirtschaftliche Maschine mit einem Drucksensor versehen ist, um einen Druck auf das Schutzelement in Richtung der landwirtschaftlichen Maschine zu detektieren.

6. Landwirtschaftliche Maschine nach einem der vorhergehenden Ansprüche,
**dadurch gekennzeichnet, daß** das Schutzelement eine Schleppklappe oder eine Schleppplatte ist.

## Revendications

1. Machine agricole (1) destinée à exécuter le traitement d,une récolte, la machine agricole étant pourvue d'un dispositif agricole mobile (2) destiné à exécuter l'opération agricole, ladite machine agricole étant pourvue d'une sortie (5) destinée à évacuer la récolte traitée de la machine agricole et d'un élément de protection (4) destiné à protéger la sortie, **caractérisée en ce que** la machine agricole (1) est une machine agricole autonome, l'élément de protection (4) présentant une flexibilité telle et un poids tel que la récolte traitée n'est pas influencée de façon nuisible par l'élément de protection (4).

2. Machine agricole selon la revendication 1, **caractérisée en ce que** l'élément de protection est disposé de façon mobile sur la machine agricole.

3. Machine agricole selon la revendication 2, **caractérisée en ce que** la machine agricole est pourvue d'une butée destinée à bloquer un déplacement de l'élément de protection dans une direction orientée à travers la sortie à l'intérieur de la machine agricole.

4. Machine agricole selon l'une quelconque des revendications précédentes, **caractérisée en ce que** la machine agricole est pourvue d'un détecteur de mouvement destiné à détecter un objet qui se déplace à travers la sortie à l'intérieur de la machine agricole.

5. Machine agricole selon les revendications 3 et 4, **caractérisée en ce que** la machine agricole est pourvue d'un capteur de pression destiné à détecter une pression sur l'élément de protection dans une direction orientée vers la machine agricole.

6. machine agricole selon l'une quelconque des revendications précédentes, **caractérisée en ce que** l'élément de protection est un volet traînant ou une plaque traînante.
